# EUROPEAN PATENT APPLICATION

(11) **EP 2 703 064 A1**
(43) Date of publication of application: **05.03.2014**
(21) Application number: 12777808.2
(22) Date of filing: 03.04.2012
(51) Int. Cl.: B01D 53/50, B01D 53/14, B01D 53/77

(54) **WET DESULFURIZATION APPARATUS AND METHOD FOR OPERATING SAID WET DESULFURIZATION APPARATUS**

(30) Priority: 28.04.2011 JP 2011101652
(71) Applicant: Kawasaki Jukogyo Kabushiki Kaisha, Kobe-shi, Hyogo 650-8670 (JP)
(72) Inventor: YOSHIZAWA, Katsuhiro, Akashi-shi, Hyogo 673-8666 (JP); HOSONO, Takamichi, Akashi-shi, Hyogo 673-8666 (JP); TAKATA, Hirotaka, Akashi-shi, Hyogo 673-8666 (JP); IWASAKI, Hidekazu, Akashi-shi, Hyogo 673-8666 (JP); NISHIMURA, Motohiko, Akashi-shi, Hyogo 673-8666 (JP); HIGASHIDA, Masanori, Kobe-shi, Hyogo 650-8670 (JP)
(74) Representative: Jenkins, Peter David
(86) International application number: PCT/JP2012/059055
(87) International publication number: WO 2012/147466

(57) **Abstract**

A wet desulfurization system and a method for operating the system is provided which is capable of operating an absorption tower so that no solid precipitate occur even if an absorption fluid (waste fluid) in the tower has a higher salt concentration. The method for operating a wet desulfurization system in which a gas introduced in an absorption tower is brought into contact with an absorption fluid within the absorption tower to desulfurize the gas, comprises measuring a salt concentration of the absorption fluid, measuring a temperature of the absorption fluid, judging whether the absorption fluid is needed to be heated, according to the salt concentration and the temperature, and heating the absorption fluid up to a target temperature if it is judged by the judging step that the absorption fluid is needed to be heated.

## Description

### TECHNICAL FIELD

The present invention relates to a wet desulfurization apparatus for absorbing and removing sulfur oxides from an exhaust gas by means of alkali absorption fluid and a method for operating the wet desulfurization apparatus.

### BACKGROUND OF THE INVENTION

The conventional wet desulfurization apparatus introduces the exhaust gas with sulfur oxides from, for example, a thermal power plant, industrial burner, incinerator, or marine, vehicle or stationary diesel engine into an absorption tower in which the sulfur oxides are brought into contact with an absorption fluid such as lime slurry, sodium hydroxide solution, or magnesium hydroxide solution or slurry to physically and chemically remove the sulfur oxides therefrom into the absorption fluid and the resultant absorption fluid is collected in a reservoir of the absorption tower.

The resultant absorption fluid including the sulfur oxides is then processed in a suitable manner to meet the effluent standard and eventually released into the river or sea as waste fluid, which needs an additional facility for processing the absorption fluid.

Using the wet desulfurization system in ships imposes some restrictions that, for example, the waste fluid processing facility should be as small as possible. Under the circumstances, the wet desulfurization system is needed to be operated in an efficient manner in order to minimize the production of the waste fluid.

The absorption fluid or waste fluid in the reservoir increases its salt concentration due to the neutralization of the acid and alkaline components contained in the liquid with an increase of the operating time of the wet desulfurization system. The increase in the salt concentration in turn tends to produce precipitate. For example, the neutralization of the exhaust gas containing sulfur oxide by using sodium hydroxide and magnesium hydroxide produces sodium sulfate decahydrate (Na₂SO₄·10H₂O) and magnesium sulfate hephydrate (MgSo₄·7H₂O), respectively. The precipitate such as sodium sulfate decahydrate and magnesium sulfate heptahydrate will be referred to as "solid precipitate" hereinafter.

The solid precipitate induces clogging of pipes in the wet desulfurization system, which in turn inhibits a long-term continuous operation of the wet desulfurization system. This may in turn need the salt concentration of the waste fluid to be reduced by, for example, adding water, eventually increasing an amount of the waste fluid.

Conventionally, there has been proposed a technique for reducing the waste fluid in which the sulfur dioxide gas SO₂ gas is removed depending upon a difference between inlet and outlet temperatures of the converter or oxidation catalyst for converting sulfur dioxide gas into sulfur trioxide gas. See, for example, patent document 1.

Patent document 1: JP 2001-11041 A

The system for processing gas containing sulfur trioxide, disclosed in the patent document 1, consumes a great amount of alkaline solution for pH control if the gas includes a mixture of sulfur dioxide and trioxide gases. This needs that sulfur dioxide gas is oxidized into sulfur trioxide gas by using oxidation catalyst in advance and then a conversion rate from sulfur dioxide into sulfur trioxide is identified from the inlet temperature of the oxidation catalyst to calculate an amount of alkaline solution necessary for the pH control.

Although the technique disclosed in the patent document 1 is indeed advantageous in decreasing the amount of alkaline solution or neutralization solution, this does not lead to a decrease in the amount of waste fluid because the amount of waste fluid in the reservoir does not change.

To solve this problem, inventors of the present invention found, in the process of seeking an improved wet desulfurization system and method that does not generate any solid precipitate such as sodium sulfate decahydrate (Na₂SO₄·10H₂O) or magnesium sulfate hephydrate (MgSo₄·7H₂O) to eventually decrease the amount of waste fluid, that the generation of the solid precipitate tends to increase with increase in the salt concentration and decrease in the temperature of the waste fluid and then the problem may be overcome by suitably controlling the temperature of the waste fluid according to the salt concentration of the waste fluid.

### SUMMARY OF THE INVENTION

A wet desulfurization system of the invention comprises an absorption tower, a reservoir formed at a bottom portion of the absorption tower, and a gas-liquid contactor for bringing a gas introduced in an interior of the absorption tower into contact with an absorption fluid. The system further comprises a heater for heating the absorption fluid, a salt concentration measuring device for measuring a salt concentration of the absorption fluid, a temperature measuring device for measuring a temperature of the absorption fluid, and a controller for driving the heater to control the absorption fluid at a target temperature according to the salt concentration and the temperature measured by the salt concentration and temperature measuring devices, respectively.

A method for operating a wet desulfurization system comprises bringing a gas introduced into an absorption tower into contact with an absorption fluid retained within the absorption tower to desulfurize the gas, comprises measuring a salt concentration of the absorption fluid, measuring a temperature of the absorption fluid, judging whether the absorption fluid is needed to be heated according to the salt concentration and the temperature, and heating the absorption fluid up to a target temperature if it is judged by the judging step that the absorption fluid is needed to be heated.

According to the invention, the waste fluid is controlled at the target temperature according to the salt concentration of the waste fluid to prevent a generation of solid precipitate. This means that, even if the waste fluid has a high salt concentration, the generation of solid precipitate is prevented by controlling the temperature of the waste fluid, avoiding a trouble such as clogging of pipes which might be caused by the solid precipitate. As a result, the wet desulfurization system can be operated for a long period of time even in a condition in which the waste fluid has a high salt concentration, eliminating a need for decreasing the salt concentration of the waste fluid by the addition of water as is done in the conventional wet desulfurization system, which in turn reducing an amount of waste fluid to be discharged.

### BRIEF DESCRIPTION OF THE DRAWINGS

Fig. 1 is a schematic structural diagram showing a wet desulfurization system according to an embodiment of the invention;
Fig. 2 is a graph showing a precipitation characteristic in a condition in which sodium hydroxide solution is used as a neutralizer;
Fig. 3 is a graph showing a precipitation characteristic in a condition in which magnesium hydroxide solution is used as a neutralizer; and
Fig. 4 is a program flow for describing an operational control of the wet desulfurization system.

### DETAILED DESCRIPTION OF THE PREFERRED EMBODIMENTS

With reference to the accompanying drawings, the wet desulfurization system (hereinafter referred to as "absorption tower") and its operating method according to an embodiment of the invention will be described below. Although the following descriptions relate to the absorption tower preferably used for desulfurization of sulfur oxide contained in the gas exhausted from combustion instruments of, for example, marine, vehicle, or stationary diesel engine, the invention can equally be applied to an absorption tower for desulfurizing sulfur oxide in the exhaust gas from another combustion instruments such as industrial burner or gasification furnace.

In the following descriptions, directional terminology such as "upper", "lower", etc., is used with reference to the orientation of the drawing(s) being described, it is used for purposes of better understanding of the invention and is in no way limiting the technical scope of the invention.

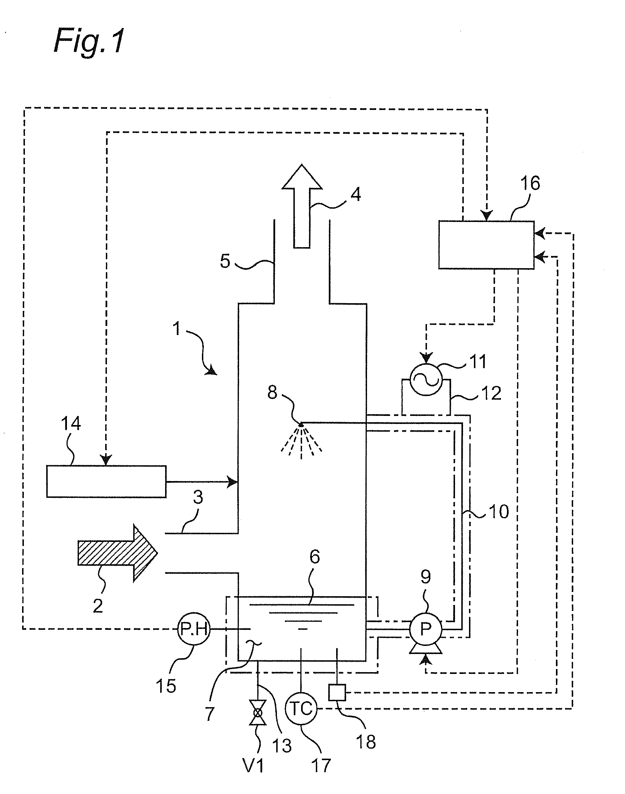

As shown in Fig. 1, the absorption tower generally indicated by reference number 1 is designed to remove sulfur oxide from the gas exhausted from the combustion instrument such as diesel engine. The absorption tower 1 has a hollow vertical cylinder, a gas inlet tube 3 connected to a lower portion of the cylinder for introducing the exhaust gas 2 to be desulfurized into the cylinder, and a gas outlet tube 5 connected to an upper portion of the cylinder for exhausting the desulfurized exhaust gas 2.

The absorption tower 1 has a liquid retaining chamber or reservoir 7 for retaining the absorption liquid 6 defined in the bottom portion of the tower. A circulation pipe 10, which is equipped with a pump 9 for circulating the absorption liquid 6, extends out through a lower-level peripheral wall portion defining the reservoir 7 and then in through a mid-level wall portion of the tower 1 to terminate at a gas-liquid contactor or spray nozzle 8 positioned at the central portion within the tower 1 so that the absorption liquid 6 is sprayed from the spray nozzle 8 into the interior of the tower 1 to make countercontacts with the exhaust gas 2 moving upward and thereby absorb the sulfur oxide contained in the exhaust gas 2 and the absorption liquid 6 in which the sulfur oxide has been absorbed is then collected again and retained by the reservoir 7.

As shown in the drawing, the reservoir 7 is surrounded by a heat insulating material such as glass wool. The circulation pipe 10 is wrapped by a heater element 12 such as ribbon heater which is in turn covered with a heat insulating material for heat-retention. An extraction tube 13 extends through a bottom wall of the reservoir 7. A valve V1 is mounted at the distal end of the extraction tube 13 so that the absorption liquid 6 can be extracted from the reservoir 7 by opening the valve V1.

The absorption tower 1 has a neutralizer supply 14 connected thereto for supplying neutralizer such as sodium hydroxide solution, or magnesium hydroxide solution into the reservoir 7. A pH sensor 15 is provided in the reservoir 7 for pH measurement of the absorption liquid 6 in the reservoir 7. The neutralizer supply 14 and the pH sensor 15 are electrically connected to a controller 16 for controlling an overall operation of the absorption tower 1 to maintain a constant pH level of the absorption liquid 6 in the reservoir 7.

As shown in the drawing, a temperature measuring unit or detector 17 for measuring a temperature of the absorption liquid 6 in the reservoir 7 and an electric conductivity measuring unit or detector 18 for measuring an salt concentration of the absorption liquid 6 are provided at the bottom wall of the reservoir 7 and electrically connected to the controller 16. Operations of the controller 16 conducted by using information output from the temperature detector 17 and the electric conductivity detector 18 will be described in detail hereinafter. In the embodiment, the salt concentration is the concentration of sodium sulfate Na₂SO₄ or magnesium sulfate MgSO₄.

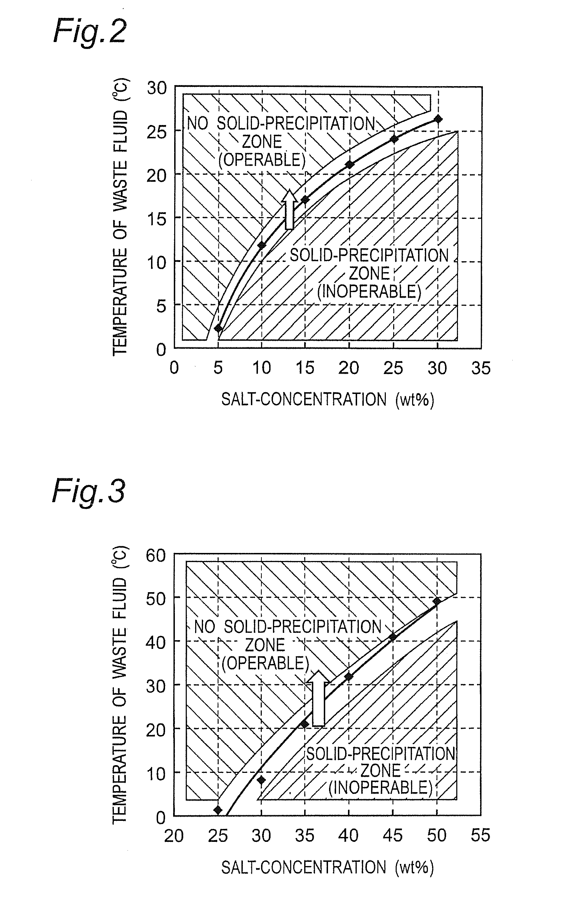

Fig. 2 is a graph showing a precipitation characteristic of sodium sulfate decahydrate (Na₂So₄·10H₂O) in the desulfurization in which solution containing sodium hydroxide is used as neutralizer for desulfurization of sulfur oxide. Fig. 3 is a graph showing a precipitation characteristic of magnesium sulfate hephydrate (MgSo₄·7H₂O) in the desulfurization in which solution containing magnesium hydroxide is used as neutralizer for desulfurization of sulfur oxide. In each of Figs. 2 and 3, the vertical axis indicates a temperature of waste fluid (absorption liquid 6) and the horizontal axis a salt concentration of the waste fluid (absorption liquid 6). As can be seen from Figs. 2 and 3, the generation of the solid precipitate tends to develop with increase of the salt concentration of the waste fluid (absorption liquid 6) and decrease of the temperature of the waste fluid (absorption liquid 6).

Fig. 2 shows that, when the salt concentration of the waste fluid or absorption liquid 6 are 5wt%, 10wt%, 15wt%, 20wt%, 25wt%, and 30wt%, the absorption tower 1 can be operated without generating solid precipitate of sodium sulfate decahydrate (Na₂So₄·10H₂O) for a long period of time by controlling the temperature of waste fluid at 2°C, 12°C, 16°C, 22°C, 24°C, and 26°C, respectively. More specifically, even if the waste fluid has a high salt concentration of 30wt%, the absorption tower can be operated without generating the solid precipitate by controlling the temperature of the waste fluid at 26°C.

Fig. 3 shows that, when the salt concentration of the waste fluid or absorption liquid 6 are 25wt%, 30wt%, 35wt%, 40wt%, 45wt%, and 50wt%, the absorption tower 1 can be operated without generating solid precipitate of magnesium sulfate hephydrate (MgSo₄·7H₂O) for a long period of time by controlling the temperature of waste fluid at 2°C, 8°C, 21°C, 32°C, 42°C, and 48°C, respectively. More specifically, even if the waste fluid has a high salt concentration of 50wt%, the absorption tower can be operated without generating the solid precipitate by controlling the temperature of the waste fluid at 48°C.

In the embodiment, the precipitate characteristic data of the solid precipitates indicated in Figs. 2 and 3 is stored in the controller 16. This ensures that the controller 16 determines the condition of the absorption fluid from the temperature and salt concentration transmitted from the temperature sensor 17 and the electric conductivity sensor 18, respectively, and, based upon the determined condition, turns on-and-off the heater 12 for heating the circulation pipe 10. The solid-precipitate characteristic data is not needed to be stored in the controller 16 and it may be memorized in an external memory, for example.

Referring next to Figs. 1, 2, and 4, operations of the absorption tower 1 so constructed will be described with an embodiment in which sodium hydroxide solution is used to desulfurize sulfur oxide contained in the gas 2 to be processed.

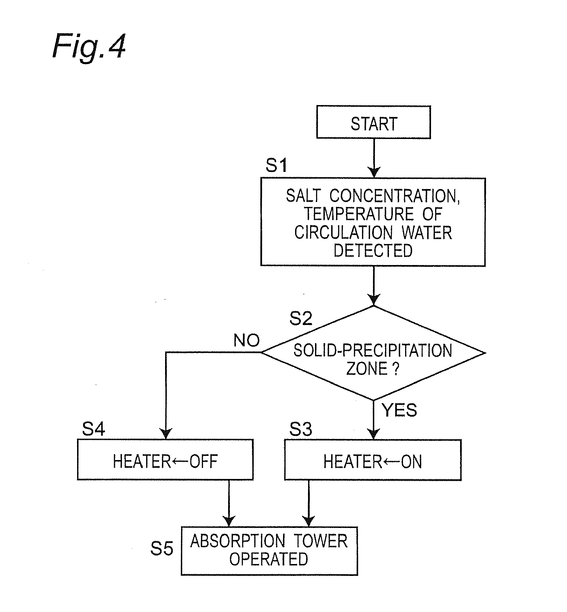

As shown in Fig. 4, at step S1 measurements are made to the temperature and salt concentration of the absorption fluid 6 in the reservoir 7 by using the temperature and electric-conductivity detectors 17 and 18, respectively, and their electric signals are transmitted to the controller 16.

At step 2, the controller 16 uses the measured temperature and salt concentration of the absorption fluid 6 or waste fluid and the solid-precipitate characteristic data of sodium sulfate decahydrate (Na₂So₄·10H₂O) obtained by using sodium hydroxide solution as neutralizer to determine whether the condition of the absorption liquid 16 resides in the precipitate generation zone so that the absorption tower 1 is operable.

If the decision at step S2 is positive (YES), i.e., the absorption fluid (waste fluid) 6 in the reservoir 7 has an increased salt concentration and a decreased temperature and therefore is in the precipitate generation zone so that the absorption tower 1 is operable, the program proceeds to step S3.

At step S3, the controller 16 turns on the heater 12 to control the temperature of the absorption fluid 6 so that the temperature falls within a range in which no solid precipitate would be generated under the present salt concentration of the absorption fluid 6 in the reservoir 7. Then, the program proceeds to step S5 where the operation of the absorption tower 1 is started.

If the decision at step S2 is negative (NO), i.e., the absorption fluid (waste fluid) 6 in the reservoir 7 is in the no precipitate generation zone so that the absorption tower 1 is inoperable, the program proceeds to step S4 where the heater 12 is turned off. Then, the program proceeds to step S5 where the operation of the absorption tower 1 is started.

Next, the controller 16 drives the circulation pump 9 to transport the absorption fluid 6 from the reservoir 7 through the circulation pipe 10 to the spray nozzle 8 in the mid-center of the absorption tower 1 where it is sprayed into the interior of the absorption tower 1. The sprayed absorption fluid 6 is brought into countercontact with the gas 2 introduced into the absorption tower 1 through the inlet pipe 3, so that the sulfur oxide in the gas 2 is absorbed in the absorption fluid 6. The gas-absorbed liquid 6 is then collected again by the reservoir 7.

The desulfurized gas 4 is then exhausted from the system through the gas outlet pipe 5. The controller 16 controls the neutralizer supply 14 according to the pH of the absorption fluid 6 transmitted from the pH sensor 15 to maintain the constant pH level of the absorption fluid 6 in the reservoir 7.

As described above, the absorption tower 1 according to the embodiment controls the liquid temperature so that no solid precipitate is generated even when the absorption fluid (waste fluid) 6 has a high salt concentration, which ensures a stable operation of the absorption tower 1. This in turn means that the system allows its long term continuous operation even when processing sulfur oxide-rich gas discharged from the combustion units using low-quality oil such as Bunker C.

For example, when desulfurizing a gas containing sulfur oxide with a concentration of 160ppm and having a flow rate of 2,249 m³N/h using 500 liters absorption fluid by means of an absorption tower 750mm in diameter and 2,000mm in height, the salt concentration of the absorption fluid in the reservoir is assumed to increase 0.4wt% per hour. Therefore, conventionally, when the salt concentration of the absorption fluid 6 reached 10wt%, it was partially discharged from the reservoir 7.

According to the invention, because the system is operable even if the salt concentration of the absorption fluid is 20wt% or more, the operation hour of the absorption tower may be extended for about 25 hours. The studies conducted by the inventors showed that the waste fluid decreased by 10 tons per hour.

According to the exemplary absorption tower 1, because the absorption tower 1 is operable even under the higher salt concentration of the absorption fluid in the reservoir, there is no need to extract the absorption fluid from the reservoir. This means that additional water is unnecessary to decrease the salt concentration of the absorption fluid, reducing the total amount of waste fluid. This in turn ensures that the present invention may be used as a ship wet desulfurization system which is incorporated in a ship for which a large scale waste fluid treatment facility is unable to be installed. Although sodium hydroxide solution or magnesium hydroxide solution is used as neutralizer for the desulfurization of sulfur oxide, it is not restrictive and calcium hydroxide Ca(OH)₂ or potassium hydroxide KOH solution may be used instead.

A long-term maintenance of the absorption fluid (waste fluid) 6 within the reservoir 1 ensures a simultaneous pH control due to oxidation of sulfur dioxide. Also, a rapid extraction of the absorption fluid (waste fluid) 6 needs an additional pH control because of oxidation from sulfur dioxide into sulfur trioxide which may be caused at the replacement of the absorption fluid from one container to another container. This oxidation proceeds gradually over time and the long-term maintenance of the absorption fluid (waste fluid) in the absorption tower eliminates the need for a facility for injecting alkaline aqueous solution.

Also, according to the absorption tower 1 of the embodiment, it is only needed to control the absorption fluid (waste fluid) at a target temperature. This eliminates the need for a larger heater and, instead, a smaller heater such as ribbon heater described above is sufficient.

It is to be understood that the above described embodiment is an aspect of the invention and the invention is not limited to it. It is also to be understood that the invention includes any variations and improvements suggested by the claims and their equivalents thereof.

### PARTS LIST

- 1: absorption tower
- 2: gas to be processed
- 3: gas inlet pipe
- 4: processed gas
- 5: gas outlet
- 6: absorption fluid
- 7: reservoir
- 8: spray nozzle
- 9: circulation pump
- 10: circulation pipe
- 12: heater
- 14: neutralizer supply
- 15: pH sensor
- 16: controller
- 17: temperature sensor
- 18: electric conductivity detector

## Claims

1. A wet desulfurization system, comprising:
an absorption tower;
a reservoir formed at a bottom portion of the absorption tower; and
a gas-liquid contactor for bringing a gas introduced in an interior of the absorption tower into contact with an absorption fluid;
**characterized in that**
the system further comprising
a heater for heating the absorption fluid;
a salt concentration measuring device for measuring a salt concentration of the absorption fluid;
a temperature measuring device for measuring a temperature of the absorption fluid; and
a controller for driving the heater to control the absorption fluid at a target temperature according to the salt concentration and the temperature measured by the salt concentration and temperature measuring devices, respectively.

2. The wet desulfurization system of claim 1, wherein the target temperature is one at which no solid precipitate would occur at the salt concentration of the absorption fluid.

3. A method for operating a wet desulfurization system for bringing a gas introduced into an absorption tower into contact with an absorption fluid retained within the absorption tower to desulfurize the gas, comprising:
measuring a salt concentration of the absorption fluid;
measuring a temperature of the absorption fluid;
judging whether the absorption fluid is needed to be heated, according to the salt concentration and the temperature; and
heating the absorption fluid up to a target temperature if it is judged by the judging step that the absorption fluid is needed to be heated.

4. The method of claim 3, wherein the target temperature is one at which no solid precipitate would occur at the salt concentration of the absorption fluid.
